# EUROPEAN PATENT SPECIFICATION

(11) **EP 3 057 859 B1**
(45) Date of publication and mention of the grant of the patent: **05.06.2019**
(21) Application number: 14798985.9
(22) Date of filing: 14.10.2014
(51) Int. Cl.: B62K 25/04, B62M 7/00, B62K 15/00, B62K 11/10, B62M 7/12

(54) **ELECTRIC MOTORCYCLE EQUIPPED WITH SUITABLE DESIGN FEATURES FOR MAKING ITS MAINTENANCE SIMPLER**
ELEKTRISCHES MOTORRAD MIT GEEIGNETEN KONSTRUKTIONSMERKMALEN FÜR VEREINFACHTE WARTUNG
MOTOCYCLE ÉLECTRIQUE DOTÉ D'ÉLÉMENTS DE CONCEPTION APPROPRIÉS POUR RENDRE SON ENTRETIEN PLUS SIMPLE

(30) Priority: 18.10.2013 IT VE20130055
(43) Date of publication of application: 24.08.2016
(73) Proprietor: Di Benedetto, Mauro Stefano, 20090 Segrate (MI) (IT)
(72) Inventor: Di Benedetto, Mauro Stefano, 20090 Segrate (MI) (IT)
(74) Representative: Bruni, Giovanni
(86) International application number: PCT/IB2014/065297
(87) International publication number: WO 2015/056168

(56) References cited:
- EP-A1- 1 389 552
- EP-A1- 2 623 405
- CN-U- 201 829 585
- DE-B3-102011 078 265

## Description

The application field of the present invention relates, in general, the efficient maintenance of electric motorcycles.

In particular, the invention relates to a preferred embodiment of an electric motorcycle model whereby the usual function of the rear suspension can be excluded in order to create a passage for the easy removal and substitution of the battery pack and other electrical components.

Generally, the electric supply of vehicles has recently remarkably developed owing to the increasing cost of internal combustion engines fuel, and above all, owing to the emission of carbon dioxide and other pollutants produced by the internal combustion engines, which represent a serious cause of air pollution, a phenomenon, that everyone wants to be solved rapidly.

Therefore, the evolution of traditional vehicles towards electric supplied vehicles should be a trend destined to be confirmed and strengthened but however there are still many difficulties which impede its development.

In particular, the more important technical problems are concentrated on:
- the development and setting up of more efficient and economic energy accumulation technologies,
- the charge management systems of said systems,
- the electronic controls needed for a suitable vehicle function and
- the general supply and maintenance processes.

Concerning the other technical components needed for realizing electric vehicles, there seems not to be particular problems. In fact, concerning the electric motors, it is possible to rely on very mature technologies able to work in the operative conditions required in the locomotive field. While, concerning the low power mechanic and electric portion of the electric vehicles, it is possible to adapt the huge state of the art developed for the traditional supplied vehicles without particular difficulties.

What just generally stated for the electric vehicles goes also for the electric motorcycles; but here there is another problem due to many space limits.

In fact, in the traditional motorcycles, the tank can have various shapes and can be almost arranged in any position. The motor as well can be positioned almost anywhere since the transmission occurs through a chain (or other transmission mechanisms) which can transmit the motion to the driving wheel at various distances.

Generally, it can be stated that in the traditional motorcycles, the key systems for the motorcycle function are positioned in distributed way on the motorcycle, and the limits are mainly due to aesthetic or maneuverability reasons.

Another prerogative of the traditional motorcycles is that the expertise needed for the maintenance of said motorcycles is very diffused. In fact, it is very easy to find a motor mechanic able to understand the reason of possible malfunctioning and to carry out the main maintenance operations of a traditional fuel supplied motorcycle.

Therefore, the electric supplied motorcycles are characterized by some important differences with respect to the traditional supplied motorcycles.

Obviously, the electric supplied motorcycles do not need a tank for the fuel, and the energy needed for the locomotion is obtained by batteries which are much bulkier than the batteries provided in the traditional motorcycles needed to support low consumption functions. Moreover, for technical reasons as well, such batteries cannot be modeled in shape as the tanks. For economic reasons as well, the battery (or batteries) shape represents a limit in the motorcycle design conception.

In addition to the battery shape, which is generally a parallelepiped, another design limit is also the fact that the battery is to be suitably protected and isolated, both for protecting it against possible damage and for protecting the motorcycle user against possible accidents.

Also the electronic subsystems are much more complex since, in addition to the electric loads provided in the traditional supplied motorcycles, it is needed to manage the power loads associated to the motorcycle motion.

Said electronic subsystems are to supervise also the control of the battery charge steps. In general, in fact, the more precise the control of the batteries charge and discharge steps is, the greater the cycles number is, which a chemical battery can ensure with acceptable performance and yield.

In case, for increasing the motorcycle autonomy, there are provided more batteries with possible different degrees of wear and charge states, the function of battery control is yet more delicate and critical. For these reasons, the electric motorcycles are provided with a subsystem, called BMS (Battery Management System), which is provided with a microprocessor card and which supervises these functions. The BMS is a quite critical element from the reliability point of view since it is provided with both pure computational electronics and power electronics since it has to manage the relatively high energies stored in the accumulation systems (or batteries).

Moreover, in addition to the traditional electronic control unit needed for controlling the electric charges typical of a vehicle (for example for lighting), it is needed a power control unit (which is generally distinct from the traditional electric control unit) for controlling the energy provided to the motor (for example for accelerating) or for managing the energy recovery during decelerations.

Also the power control unit is a very stressed subsystem which can be subjected to failures and malfunctioning.

These considerations about the electronics provided in the electric motorcycles are aimed at highlighting that the electronics of an electric motorcycle is more complex than the very simpler one of a traditional motorcycle.

As a consequence, nearly all failures or malfunctioning of electric motorcycles are due to batteries deterioration or to malfunctioning of the electric and electronic subsystems needed for the electric motorcycle functioning: in particular the BMS subsystem and the power control unit.

Given the complexity of the onboard electronics of an electric motorcycle, it is more complex a case of failure or malfunctioning to be diagnosed than with a traditional motorcycle as well, and basically, a complete and precise maintenance service can occur only at suitable computerized work stations for carrying out diagnostic tests, and said work stations can be available only in specialized sites prepared for the aim; and, naturally, these sites cannot be diffusely distributed as well as the traditional ones.

Generally, yet as a consequence of what stated, it is reported that in most cases the failures occurring to electric motorcycles are solved by substituting a broken component.

Concerning all what just stated, the needed expertise for maintenance and repair of electric motorcycles is not diffused as well as the one for maintenance and repair of traditional motorcycles, and, given the technical peculiarities associated to the electric motorcycles, it is to be expected that the maintenance network of such means is articulated on two levels wherein the most precise diagnostics is carried out at a strongly centralized level (concentrated in few or very few sites).

Many electric motorcycles provided on the market are the evolution of traditional motorcycles, and the criteria used for providing the frames are possibly inspired by the various frame kinds yet available in the consolidated field of traditional motorcycles.

Therefore, the current electric motorcycle offer provides diffused models in which, after adopting a kind of frame inspired by classic shapes, attempts have been made to arrange the battery (or batteries) and the various electronic components in the available spaces: so, the batteries are generally arranged in the greater and more protected space among the available ones, while the various electronic components, smaller and often with less shape limits, are arranged in distributed way in the more suitable spaces according to the various models.

A relevant example of an "electrically driven vehicle" (i.e. a motorcycle) according to the prior art is described in EP 1 389 552 A1 (Yamaha Motor Co. ltd. [JP]). In this example, the battery pack is removable and it is placed in a chamber obtained under the seat.

The result obtained in the electric motorcycles provided on the market is that the various peculiar elements of this kind of motorcycles are arranged in different positions of the same motorcycle and are provided with different access points for their removal.

Another prerogative of the electric motorcycles is that electric motors can be more compact than the internal combustion ones, and that they can also be directly integrated in the driving wheel, thus avoiding the need of a transmission system for transmitting the motion from the motor to the wheel, since the rotary motion is generated on the same wheel.

It is to be said that the electric motor technology is particularly mature and reliable, and therefore the motor failures are to be considered a very rare (almost minor) event with respect to the failures the other electric and electronic subsystems can be subjected to.

The possibility to integrate the motor directly in the driving wheel, as said, eliminates the need of a transmission system and as a consequence eliminates the limit (provided instead in the internal combustion engine motorcycles which need a transmission system, for example a chain) to preserve a free space between the motor and the driving wheel; moreover, eliminating portions in movement subjected to wear and that need lubrication, it is eliminated one of the causes for which maintenance is required in the traditional motorcycles.

Still concerning the evolution trend of electric motorcycles it is observed how, in many models, attempts were made to provide motorcycles in which the battery removal is simplified, in order to make also the user of the same motorcycle able thereto.

This trend is justified by the fact that the charge times for a battery are not comparable to the fueling times of a traditional motorcycle, the battery recharge times being very much longer.

It was then considered that the substitution of an exhausted battery with a charged one could be an alternative solution to recharging in order to speed up the procedure equal to fueling.

Generally, the possibility to extract the battery allows to provide more flexible supply procedures: for example if the motorcycle is parked in a place not prepared for recharging, the motorcycle user can extract the battery and bring it in a place where it is possible to recharge it.

Regardless of the effective application of these procedures, all the most recent models of electric motorcycles are characterized in that they have one or more batteries housed in spaces accessible by the user of the motorcycles as well, who, at least theoretically, should be able to remove the so called "battery pack".

This structural feature of the most recent electric motorcycles seems not to be really useful since there are not so many users of electric motorcycles, who after parking their means, remove the "battery pack" in order to substitute it or bring it in a suitable place for recharging.

The little success of these procedures can be justified by the fact that there are not yet diffused standards allowing an efficient battery substitution and recharging in suitable stations.

However, it is also possible that the removal operation of a "battery pack", which is generally very heavy, is an extremely uncomfortable operation for the user. Moreover, the more the "battery pack" light is, the smaller the autonomy is that said batteries can ensure, and so the maneuverability of the battery is a need which strikes against the autonomy which is certainly more important.

Generally, the user needs an ever greater autonomy, and this corresponds to ever bulkier and heavier batteries, and so ever less suitable to be regularly "manipulated" by the same user.

Considering the limits of autonomy which can be reached by the electric motorcycles, and the battery volumes and weights, it is reasonable to aim at providing on the market means which allow a typical daily usage (home-work journeys or the same), a sufficient autonomy for the whole day being available. In this kind of usage, the night can be used for recharging the batteries in a fixed station (for example the home box) without the need they to be removed.

In this case, which can be taken as reference to define structural and performance goals, it seems that the easiness to remove the battery pack by the user of the means is not a particularly important aspect.

Another typical case of usage is the one of electric motorcycle fleets, which can be used for urban services (for example mail delivery services). Also in these cases, the motorcycles are subjected to a daily typical regular usage which comprises also long stop times; therefore also in this case, the main requirement is not represented by the maneuverability of the battery, but consists in the possibility to ensure an autonomy able to cover the typical need of a work shift.

All the just reported considerations about the electric motorcycle features according to the known art allow to individuate a technical problem still felt in many important cases of electric motorcycle usage: it is a question of ensuring an efficient maintenance of such means while considering that a network of services suitable for said maintenance cannot be capillary, and that the times and the repair costs have to be the lowest possible ones.

Aim of the present invention is to provide an electric motorcycle in which a great deal of failures or malfunctioning can be managed at not necessarily specialized or equipped sites for diagnosing a failure or malfunctioning (typically such repair operations could be possible also at a sales point).

Another aim of the present invention is to make easier and more efficient a maintenance procedure of the electric motorcycles in which there is provided a first level of maintenance with capillary diffusion and able to provide a very fast service of the motorcycle without particular expertise or equipment requested, and a second level, very centralized, which can work in a calmer way and which can accomplish the failure or malfunctioning diagnose and act consequently, all without that the user is penalized by long times of not availability of the means, and thus being able to adopt procedures aiming at the limitation of repair costs.

Finally, another aim of the present invention is to rationalize the electric motorcycles logistics considering that it is not convenient to provide great stocks for the most expensive elements which suffer from long stock times in not suitably equipped environments.

These and other aims are reached by providing an electric motorcycle in which at least the "battery pack", the "BMS (Battery Management System)" and the "power control unit" are rigidly connected and form an unique "block of electric components" characterized in that said "block of electric components" can be removed by said electric motorcycles while maintaining its relative connections among its rigidly blocked portions.

The main advantages of the present invention are that the electric motorcycle realized according to the teachings better described in the following satisfies all the aims it was conceived for; more precisely, all the failures or malfunctioning due to the subsystems mainly subjected to criticalities can be removed with a substitution procedure of an unique rigid block, without the need the nature of the problem to be precisely diagnosed. Said substitution, even if it is not a suitable operation that the user can do in general, it is however simple enough and such that anyone can carry it out without the need to be equipped with particular means or to be particularly expert therein.

Moreover, the block extracted and to be repaired, even if it is heavy and bulky to be manipulated by a general user, can be however easily managed from a logistic point of view, and can be shipped without particular urgency to a specialized maintenance service where the repair can occur accurately substituting only the component (or components) responsible for the failure or the malfunctioning.

Such invention has also further advantages which will be more clear from the following description, the appended claims which make up an integral part of the same description, and from the illustration of a practical embodiment described as a way of not limiting example in the following and in the appended drawings, in which:
- Figure 1 shows a view of a motorcycle according to the invention, in "opening" position suitable for removing the "block of electric components", which is represented extracted,
- figure 2 shows the same view of a motorcycle according to the invention in "opening" position where instead the "block of electric components" is represented introduced in the motorcycle,
- figure 3 shows a view of the motorcycle according to the invention in "closed" position with the "block of electric components" introduced in the motorcycle; therefore in the position of normal usage,
- figures 4 and 5 show a view of a motorcycle according to the invention, from an angle which allows to see the obstacles for a possible extraction from above the "block of electric components",
- figure 6 shows a simplified block diagram of the main electric and electronic components intended for the motion of the electric motorcycle;
- figure 7 shows a simplified block diagram of a typical battery charger subsystem for applications on electric motorcycles.

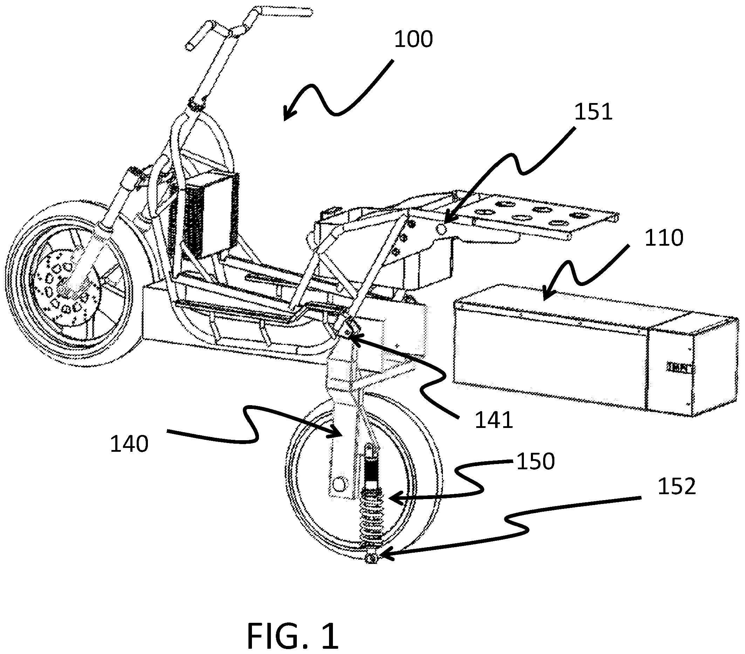

In figure 1, indicated with the reference number 10, it is represented an electric motorcycle in which there are highlighted some essential elements and it is instead "free" of other elements (as for example the fairing) and accessories not essential to show the present invention. In particular with the number 110 it is indicated a particularly bulky but rigid and compact element. Such element 110 is the "block of electric components" and is represented outside the motorcycle 100.

The "block of electric components" 110 is extracted from the motorcycle 100, by taking it out from its seat, thanks to the fact that the motorcycle 100 is provided with a rear fork indicated with the number 140 which rotates on the constraint, indicated in figure 1 with the number 141, by means of which it is coupled to the frame. Therefore, thanks to the rotation of the fork 140 on the constraint 141 the motorcycle rear wheel is lowered so that a sufficiently great passage is provided to take out the "block of electric components" 110 which, during the normal functioning of the motorcycle 100, is housed in a compartment obtained in the lower portion of the motorcycle 100.

In figure 1, indicated with the number 150, it is also highlighted the rear suspension of the motorcycle 100. Said suspension 150 is represented with a free end 152. In fact, when the motorcycle 100 is in "opening" position suitable for removing the "block of electric components" 110, the suspension 150 has to be excluded from its nominal function which is that to maintain the rear wheel in the correct position suitable for driving. So, in the example of figure 1, the rear suspension 150 is represented not constrained by the constraint, represented with the number 151, which is on the frame of the motorcycle 100. By decoupling the end 152 of the rear suspension 150 from the constraint 151, the suspension, solely constrained to the axis of the rear wheel, is free to rotate and allows the rotation of the fork 140 as well in order to provide the passage needed for removing the "block of electric components" 110.

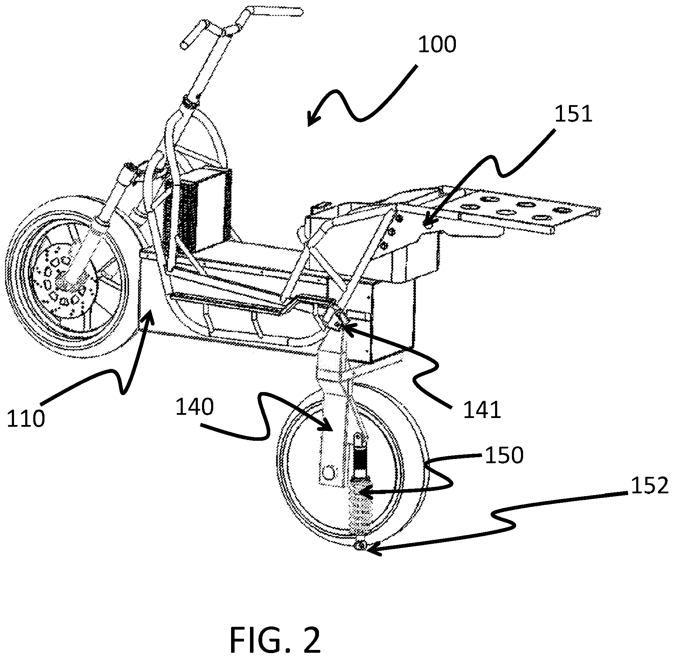

Figure 2 is very similar to figure 1, in fact it is represented the motorcycle 100 in the same view and in the same position of figure 1, with the only difference that the "block of electric components" 110 is housed in the position of normal functioning.

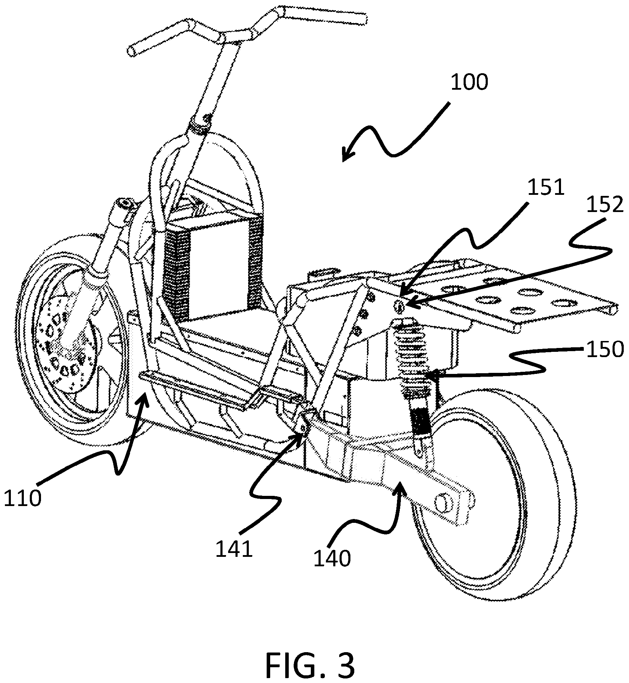

Therefore the sequence of figures 1 and 2 helps to show the movement needed to remove the "block of electric components" 110. Figure 3 shows the motorcycle 100 in "closed" position, i.e. in the position to be assumed in its normal functioning. In such position, the rear suspension 150 has its end 152 coupled to the constraint 151 arranged on the frame of the motorcycle 100, while the rear fork 140 is rotated so that the rear wheel is in the correct position for the movement. In this configuration, the suspension 150 can work correctly to absorb possible unevenness of the road occurring during the drive. It is to be noted how the articulation arranged on the constraint 141 of the fork 140 to the frame has a double function: in "opening" position it allows to shift, by lowering it, the rear wheel enough to remove the "block of electric components" 110, while in "closed" position it allows the rear suspension 150 to work correctly allowing the movement of the rear wheel.

From the view of figures 1, 2 and 3 it can be easily assumed the operative mode with which the "block of electric components" 110 can be removed and substituted, but above all it can be appreciated the easiness of the operation. In fact, it is sufficient to lift the rear portion of the motorcycle 100 (for example by pulling it upwards by means of a hook or arranging it on a suitable stand), thereafter the upper end 152 is decoupled from the suspension 150 of the constraint 151; at this point, the rear fork 140 is free to rotate and the rear wheel to shift downwards thus providing a great passage easily accessible by an user, who can simply take out the "block of electric components" 110 and substitute it, in case of need, with another functioning "block of electric components". The motorcycle 100 is then assembled again in its configuration of normal usage re-arranging the rear wheel in its drive position and re-coupling the end 152 of the suspension 150 to the constraint 150.

The example shown by means of the figures provides that the rear suspension is decoupled in its upper constraint arranged on the frame, but it is clear that the inventive concept does not consider such choice. What is really important is that the rear suspension is excluded to allow the rear fork to rotate and to allow the rear wheel to be shifted from its normal position, which would prevent from accessing from the rear to the lower portion of the motorcycle. Therefore, it makes no difference the mode of decoupling the rear suspension, for example the lower end could be decoupled, and the suspension could remain hanged to the frame. It is also to be considered the cases in which the rear suspension is realized with mechanic modes different from the traditionally diffused ones: the inventive concept is to be interpreted in a more general way considering an electric motorcycle 100 in which the rear suspension can be somehow (according to how said suspension is mechanically realized) excluded from its main function to allow the rear wheel to be lowered in such a position that the access to the lower portion of the electric motorcycle 100 is not obstructed from the rear. Obviously, the rear suspension, according to the teachings of the present invention, besides not being opposed to the rotation of the rear fork, has to also be positioned itself so that it is not an obstacle for the access to the lower portion of the electric motorcycle 100 from the rear. Therefore, the mechanic configuration of the rear portion of the electric motorcycle 100 represented in figure makes up certainly a configurations with many structural advantages, and it results very useful to describe the inventive concept, but however it is to be considered only one of the various mechanic configurations possible which allow to implement the inventive idea.

The rear extraction of the "block of electric components" 110 is very efficient and simple because, if carried out according to the teachings of the present invention, it does not require particular equipment (only a stand, or a hook to which the rear portion of the motorcycle 100 is to be hanged to be partially lifted as much as it is needed for lowering the rear wheel) and does not require the motorcycle portions to be disassembled. It is however possible to prepare the motorcycle 100 also because the substitution of the "block of electric components" 100 can be carried out from above or under the motorcycle 100.

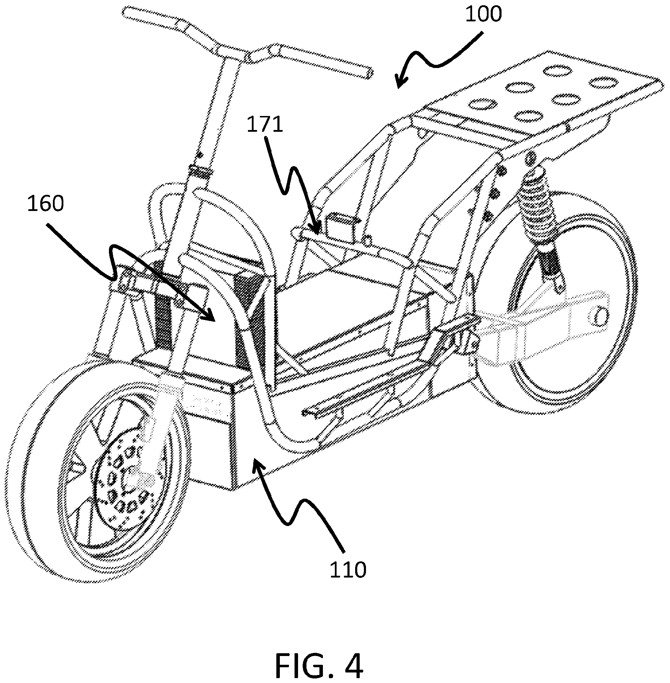

In figure 4, it is represented a view of the motorcycle 100 which allows to appreciate an extraction mode of the "block of electric components" 100 from above.

It is clear that in order to carry out the extraction of the "block of electric components" 110 from above it is needed at least to remove the plastic covers which coat the frame and which are indispensable to protect the same "block of electric components" 110. Moreover, in figure 4, there are highlighted other elements of the motorcycle 100 which can be disassembled to carry out the operation in safety: for example, with the number 160 it is represented the radiator, and with the number 171 a frame stiffening element, but it is clear that also other elements could be removed to provide a sufficient passage for the extraction of the "block of electric components" 110 or solely to avoid that in the extraction operation (it is not to be ignored that the "block of electric components" 110 is particularly heavy) something is damaged, for example the motorcycle saddle.

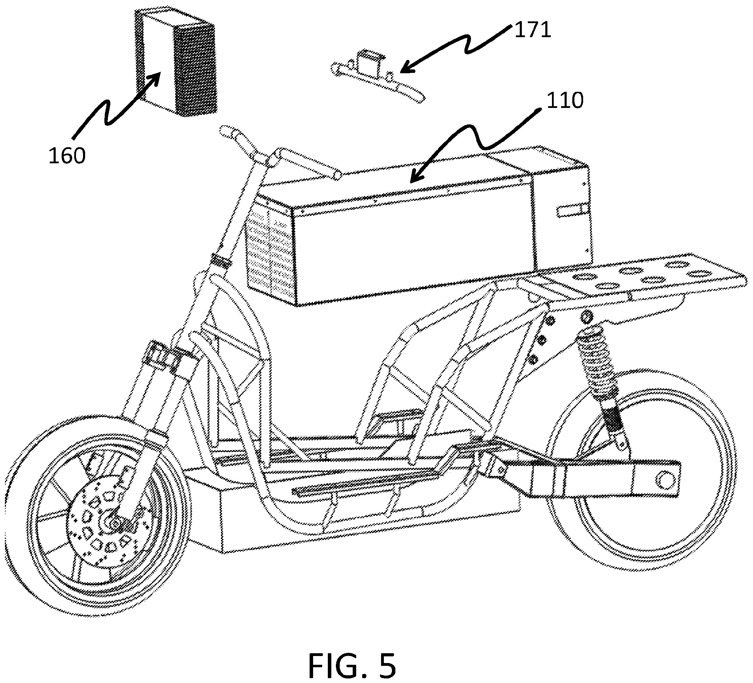

In figure 5, the electric motorcycle 100 represented in the example of figure 4 is represented with the "block of electric components" 110 in outer position; and in the example of figure 5 it is highlighted how it is needed to disassemble the radiator 160 and the stiffening element 171 of the frame as well.

It is also clearly possible the extraction of the "block of electric components" 110 from under the motorcycle 100. In this case, it is clearly needed to lift the motorcycle 100 so that it is possible to work comfortably also from under; moreover, it is to be provided a lower body which can be disassembled and sufficiently robust to sustain and protect, when it is closed, the "block of electric components" 110; moreover, the closure mechanisms have to be reliable enough to minimize the accidental opening risk, and have to be of easy maintenance since positioned necessarily in a point subjected to be rapidly dirtied.

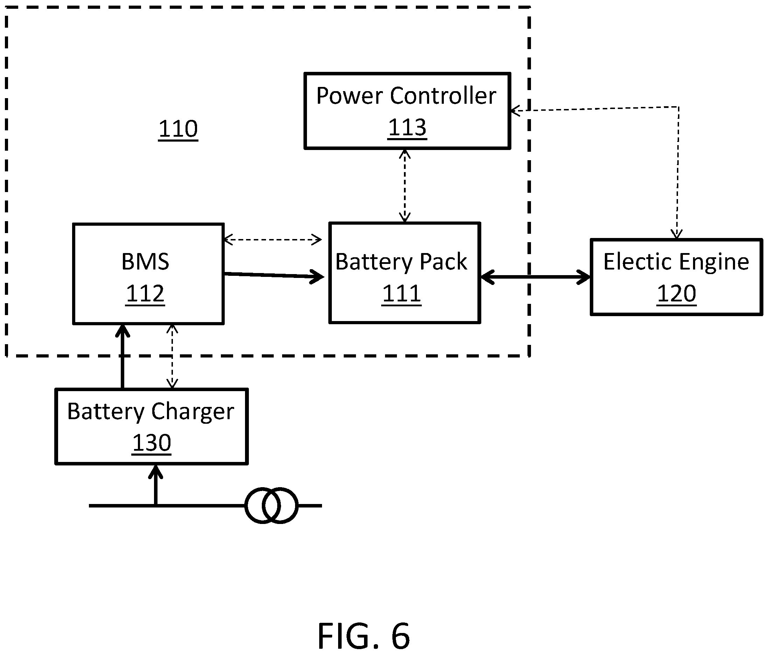

In figure 6, it is represented a simplified block diagram which allows to synthetize the main functions to be carried out by some important electric and electronic components provided in the motorcycle 100.

The arrows in continuous line indicate the energy flows, while the arrows in dashed line indicate the flows of information and command exchanges between the various components considered.

With the number 130, it is indicated the battery charger block. The function of the battery charger 130 is to absorb electric energy from an outer source, which can be the power mains, and to carry out convenient current, tension and regime transformations aiming at transferring the electric energy to the battery charger, indicated with the number 111. Generally, the battery pack 111 is made up of a plurality of accumulation modules, and each accumulation module is subjected to charge and discharge cycles, deteriorating it. In order to preserve the efficiency and the duration of the accumulation modules it is important that the charge cycles are carried out observing suitable tension and current profiles and that also the temperature of the single module is controlled to avoid, for example, an excessive overheating which would damage them. From these simple considerations it results clear that the performances, the efficiency and the duration of the battery pack 111 need a specific control of the charging processes which is carried out by the component called BMS (Battery Management System) represented in figure 4 with the number 112. The BMS 112 provides so to transmit in a controlled way the energy coming from the battery charger 130 to the single accumulation modules of the battery pack 111; and exchanges information and commands with the battery charger 130 and the battery pack 111.

Still in the block diagram of figure 6, with the number 120 it is represented the electric motor block. Naturally, the electric motor 120 has to be supplied by the battery pack 111; however, said supply needs to be regulated according to the power to be fed to the electric motor 120 for example to accelerate or slow down the drive. Moreover, during the deceleration also a recovery of the kinetic energy has to be managed. Also in this case, there have been reported some simple considerations in order to make clear the need for suitable controls also to supervise the supply of the electric motor 120; and such controls are logically carried out by means of the functional block represented in figure 6 with the number 113, and which in the most common embodiments are carried out by a power control unit. In order to carry out its functions the power control unit 113 has to exchange data and commands at least with the battery pack 111 and with the electric motor 120.

The BMS 112, the battery pack 111 and the power control unit 113 together can be assembled in a macro-block, called "block of electric components", represented in figure 4 with the dashed line and indicated with the number 110.

It is clear that, by integrating in only one block three elements which normally are separated and maintained rigidly connected, both the power connections and the data connections can be simplified and conceived to be disconnected only in precise situations and conditions, and not to carry out the normal maintenance.

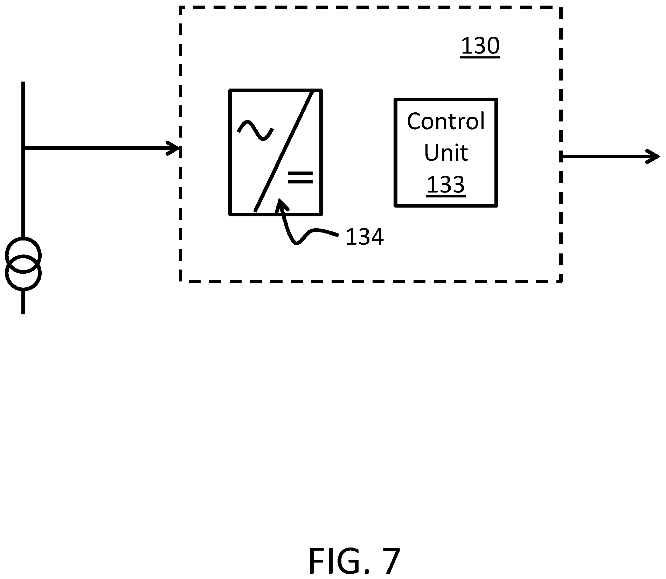

Figure 7 shows instead in greater detail the battery charger 130, which in figure 7 is represented with a macro-block in dashed line. In particular, there are indicated two fundamental elements provided in the battery chargers typically used in the electric motorcycles, i.e. a transformation element, indicated with the number 134, and a control unit, indicated with the number 133, which supervises the transfer of power to the charge, and which exchanges information, in case of this example, with the BMS 112.

In the preferred embodiment of the present invention the whole battery charger 130 is considered outside the "block of electric components" 110 since the battery chargers are considered extremely reliable elements and not subjected to failures, however it is clear that there could be also greater integrations and also the control unit 133 could be integrated in the "block of electric components", leaving only the transformation element 134 outside said block.

The basic concept of the present invention consists in grouping in a compact and for its logistic management optimized block the electric and electronic components which are typically subjected to failures in electric motorcycles, and whose diagnostics is particularly complex and can require specific equipment. It is clear that, not departing from the scope of the invention, there can be integrated, in addition to the BMS 112, the battery pack 111 and the power control unit 113, also other electric elements. For example, by being inspired by figure 5, it can be possible to integrate the whole o part of the battery charger 130, or there can be integrated elements of the low power electric subsystem of the motorcycle.

Moreover, in the "block of electric components" 110 there can be integrated not functional but protective elements, such for example, fuses and relays.

Finally, when the elements integrated in the "block of electric components" 110 are in function, there would be provided suitable inner wiring in the "block of electric components" 110 and the outer connections. Concerning this last aspect, it is to be observed how it is conceived a connector (or system of connectors) optimized to simplify the removal and the repositioning of the "block of electric components" 110; this always so that the substitution operation of the "block of electric components" 110 can be carried out by a little expert user, and without the risk that such extraction and restoration operations can cause breakings or incorrect connections.

Previously there have been reported examples of how in the "block of electric components" 110 can be integrated ever more elements of the motorcycle 100, but, obviously, said "block of electric components" 110 can also be conceived in reduced way. For example, whenever the power control unit 113 results, in future, sufficiently reliable so that it does not need to be integrated in the "block of electric components" 110, the present invention could be applied considering a reduced "block of electric components" 100, and made up solely of the BMS 112 and the battery pack 111 equipped with suitable wiring, connections and protection circuitry.

As yet said, the "block of electric components" 110 comprises in an unique macro-block a plurality of elements which are normally positioned in different points of the electric motorcycle 100; and since they are grouped, such elements can be suitably manipulated all together without being disconnected with respect to each other. It is thus clear that the "block of electric components" 110 has to provide also a mechanic grouping which ensures that all the elements thereof maintain their reciprocal positions unchanged. This can be obtained collecting all the elements by means of a rigid structure which contains them, to which each elements should be rigidly fixed, or realizing on the body of each element rigid mechanic connections (for example by fixing two elements with respect to each other by means of screws) or using a combination of such methods.

It is ultimately clear that further variants can be made by the expert in the field without departing from the scope of the invention as claimed.

It is also to be noted that the realization of an electric motorcycle 100 with the structural feature above described, besides easing maintenance, allows also important optimization of logistic and distribution of such means.

In fact, the "block of electric components" 110 represents also the most expensive portion of the whole means and the most delicate one to be stored. In particular, the "battery pack" 110 is better preserved at controlled temperatures and however it is not convenient that the batteries are stored for long periods without being subjected to controlled charge and discharge cycles. Electric motorcycles 100 conceived as the ones according to the present invention allow to set up particularly efficient distributing processes towards the sales points; in fact, there can be organized shipments of great quantities of motorcycles free of the "block of electric components" 100. In this way, the shipment costs are saved thus maintaining low the storage costs (since the value of the "block of electric components" is not immobilized) and the means can be kept also in not heated boxes. The "blocks of electric components" instead can be shipped with different channels: upon order or maintaining very little stocks of "blocks of electric components" at the sales points to ensure a "prompt delivery".

Finally, from the whole description it is clear how the described motorcycle 100 defines the application of a method which allows to carry out a two levels maintenance process of said electric motorcycles 100.

More precisely, the method comprises at least three essential steps which can be synthetized in the following three points, in which the second point, the characterizing one, is divided in seven detailed steps.
1. Individuation of a malfunctioning or failure in an electric motorcycle 100 which could be due to the "block of electric components".
2. Delivery of the means to a not specialized, capillary diffused site (for example a sales point) in which the user carries out the following steps:
   a. lifting the rear portion of the electric motorcycle 100;
   b. exclusion of the rear suspension 150 of the electric motorcycle 100, thus allowing the rear fork, which remains constrained to the frame of the electric motorcycle 100 by means of the rotating constraint 141, to rotate with amplitude enough to lower the rear wheel up to provide a passage through which it is possible to access to the compartment arranged in the lower portion of the electric motorcycle 100, compartment which, in the normal closed configuration, is in front of the rear wheel of the electric motorcycle 100, and so not accessible from rear;
   c. removal of the "block of electric components" 110 housed in said compartment arranged in the lower portion of the electric motorcycle 100;
   d. substitution of the "block of electric components" 110 with another functioning "block of electric components" 110;
   e. closing the electric motorcycle 100 by lifting the rear wheel up to restore its nominal position suitable for the drive of the means and restoration of the correct function of the suspension 150;
   f. verification that the failure or malfunctioning is no more present and let the user leave;
3. shipment of the "block of electric components" 110 to a centralized and specialized maintenance site for repair.

The performance of these fundamental three steps and in particular of the second one, characterized a method which allows to carry out the maintenance processes of very simple, efficient and economic electric motorcycles, thus contributing to overcome one of the causes of the current little diffusion of the electric motors.

## Claims

1. Electric motorcycle (100) having a rear suspension (150) and a rigid "block of electric components" (110), and said "block of electric components" comprising at least the "battery pack" (111) and the "BMS (Battery Management System)" (112) is removable from said electric motorcycle (100) thus maintaining rigidly blocked all the mechanic and electric connections between said "battery pack" (111), said "BMS" (112) and all the possible further components of said "block of electric components" (110), and said electric motorcycle (100) is **characterized in that** the end of said rear suspension (150) can be decoupled from motorcycle frame in order to allow the rear wheel to be lowered, thanks to the rotation of the rear fork (140) around the constraint (141) which keeps said rear fork coupled to the motorcycle frame, whereby a passage is provided for the removal of said "block of electric components" (110).

2. Electric motorcycle (100) according to the preceding claim, wherein in said "block of electric components" (110) are also integrated the functions of the power control unit (113).

3. Electric motorcycle (100) according to claim 1, wherein the upper end (152) of the rear suspension (150) can be decoupled from the frame of the electric motorcycle (100) to allow said suspension (150) to rotate around its lower constraint.

4. Electric motorcycle (100) according to claim 1 wherein, when said motorcycle (100) is lifted from the ground and said rear suspension (150) is decoupled from the motorcycle frame, the rear fork (140) rotates freely around its constraint on the frame and allows the rear wheel to be lowered enough to provide a passage through which it is possible to access to a compartment arranged in the lower portion of said electric motorcycle (100) from rear.

5. Method for repairing an electric motorcycle (100) as in any of the preceding claims, which is carried out by a not specialized maintenance site, when a malfunctioning or failure which can be due to the "block of electric components" (110) is individuated, and **characterized by** the following steps:
a. lifting the rear portion of the electric motorcycle (100);
b. exclusion of the rear suspension (150) of the electric motorcycle (100), thus allowing the rear fork (140), which remains constrained to the frame of the electric motorcycle (100) by means of the rotating constraint (141), to rotate with amplitude enough to lower the rear wheel up to provide a passage through which it is possible to access to the compartment arranged in the lower portion of the electric motorcycle (100) from rear, compartment which, in the normal closed configuration, is in front of the rear wheel of the electric motorcycle (100), and so not accessible from rear;
c. removal of the "block of electric components" (110) housed in said compartment arranged in the lower portion of the electric motorcycle (100) through the passage provided by means of the preceding steps of opening (a. and b.) of the electric motorcycle (100);
d. substitution of the "block of electric components" (110) with another functioning "block of electric components" (110);
e. lifting the rear wheel up to reach its nominal position suitable for the drive of the motorcycle and restoration of the suspension (150) in the configuration suitable for its normal function;
f. verification that the failure or malfunctioning is no more present.

## Patentansprüche

1. Elektrisches Motorrad (100) mit einer hinteren Aufhängung (150) und einem starren "Block von elektrischen Komponenten" (110), wobei der "Block von elektrischen Komponenten" mindestens das "Batteriepack" (111) und das "BMS" (Battery Management System)" (112) ist von dem elektrischen Motorrad (100) abnehmbar, wodurch alle mechanischen und elektrischen Verbindungen zwischen dem "Batteriepack" (111), dem "BMS" (112) und allen möglichen weiteren Komponenten des "Blocks von elektrischen Komponenten" (110) starr blockiert werden, und das elektrische Motorrad (100) ist **dadurch gekennzeichnet, dass** das Ende der hinteren Aufhängung (150) vom Motorradrahmen entkoppelt werden kann, um zu ermöglichen, dass das Hinterrad durch die Drehung der hinteren Gabel (140) um die Begrenzung (141), die die hintere Gabel mit dem Motorradrahmen gekoppelt hält, abgesenkt wird, wodurch ein Durchgang zum Entfernen des "Blocks von elektrischer Komponenten" (110) bereitgestellt wird.

2. Elektrisches Motorrad (100) nach dem vorhergehenden Anspruch, wobei im "Block von elektrischer Komponenten" (110) auch die Funktionen der Leistungssteuereinheit (113) integriert sind.

3. Elektrisches Motorrad (100) nach Anspruch 1, wobei das obere Ende (152) der hinteren Aufhängung (150) vom Rahmen des elektrischen Motorrads (100) entkoppelt werden kann, um zu ermöglichen, dass sich die Aufhängung (150) um ihre untere Begrenzung dreht.

4. Elektrisches Motorrad (100) nach Anspruch 1, wobei, wenn das Motorrad (100) vom Boden abgehoben wird und die hintere Aufhängung (150) vom Motorradrahmen entkoppelt ist, dreht die hintere Gabel (140) frei um ihre Begrenzung am Rahmen und ermöglicht, dass das Hinterrad ausreichend abgesenkt wird, um einen Durchgang bereitzustellen, durch den es möglich ist, von hinten in ein Abteil zu gelangen, das in dem unteren Abschnitt des elektrischen Motorrads (100) angeordnet ist.

5. Verfahren zum Reparieren eines Elektromotorrades (100) nach einem der vorhergehenden Ansprüche, das von einer nicht spezialisierten Wartungsstelle ausgeführt wird, wenn eine Fehlfunktion oder ein Ausfall, die durch den "Block von elektrischer Komponenten" (110) verursacht werden können, hervorgerufen wird und durch folgende Schritte gekennzeichnet:
a. Anhebung des hinteren Abschnitts des elektrischen Motorrads (100);
b. Ausschluss der hinteren Aufhängung (150) des Elektromotorrads (100), wodurch die hintere Gabel (140), die durch die Drehbegrenzung (141) an den Rahmen des Elektromotorrads (100) gebunden bleibt, mit einer ausreichenden Amplitude drehen kann, um das Hinterrad zu senken, um einen Durchgang bereitzustellen, durch den es möglich ist, zu dem im unteren Abschnitt des Elektromotorrads (100) angeordneten Abteil von dem hinteren Abteil aus Zugang zu erhalten, das in der normalen geschlossenen Konfiguration vorne des Hinterrades des elektrischen Motorrads (100) und somit von hinten nicht zugänglich ist;
c. Entfernung des "Blockes von elektrischer Komponenten" (110), der in dem Abteil untergebracht ist, das in dem unteren Abschnitt des Elektromotorrads (100) angeordnet ist, durch den Durchgang, der durch die vorhergehenden Öffnungsschritte (a. und b.) des elektrischen Motorrads (100) vorgesehen ist;
d. Ersetzung des "Blocks von elektrischer Komponenten" (110) durch einen anderen funktionierenden "Block von elektrischen Komponenten" (110);
e. Anhebung des Hinterrads, um seine für den Antrieb des Motorrads geeignete Nennposition zu erreichen, und Wiederherstellung der Aufhängung (150) in der Konfiguration, die für ihre normale Funktion geeignet ist;
f. Verifizierung, dass der Fehler oder die Fehlfunktion nicht mehr vorliegt.

## Revendications

1. Moto électrique (100) avec une suspension arrière (150) et un "bloc de composants électriques" rigide (110), ledit "bloc de composants électriques" comprenant au moins le "groupe batterie" (111) et le "BMS (Battery Management System) "(112) est amovible de ladite moto électrique (100), bloquant ainsi de manière rigide toutes les connexions mécaniques et électriques entre ledit "groupe batterie "(111), ledit "BMS"(112) et tous les autres composants possibles dudit "bloc de composants électriques" (110), et ladite moto électrique (100) est **caractérisée en ce que** l'extrémité de ladite suspension arrière (150) peut être découplée du châssis de la moto afin de permettre à la roue arrière de s'abaisser, grâce la rotation de la fourche arrière (140) autour de la contrainte (141) qui maintient ladite fourche arrière couplée au châssis de la moto, un passage étant prévu pour le retrait dudit "bloc de composants électriques" (110) .

2. Moto électrique (100) selon la revendication précédente, dans laquelle les fonctions de l'unité de commande de puissance (113) sont également intégrées dans ledit "bloc de composants électriques" (110).

3. Moto électrique (100) selon la revendication 1, dans laquelle l'extrémité supérieure (152) de la suspension arrière (150) peut être découplée du châssis de la moto électrique (100) pour permettre à ladite suspension (150) de tourner autour de sa contrainte inférieure.

4. Moto électrique (100) selon la revendication 1, dans laquelle, lorsque ladite moto (100) est soulevée du sol et que ladite suspension arrière (150) est découplée du châssis de la moto, la fourche arrière (140) tourne librement autour de sa contrainte sur le châssis. et permet à la roue arrière d'être suffisamment abaissée pour créer un passage par lequel il est possible d'accéder à un compartiment aménagé dans la partie inférieure de ladite moto électrique (100) par l'arrière.

5. Procédé de réparation d'une motocyclette électrique (100) selon l'une quelconque des revendications précédentes, exécuté par un site de maintenance non spécialisé, lorsqu'un disfonctionnement ou une défaillance pouvant être due au "bloc de composants électriques" (110) est identifié, et **caractérisé par** les étapes suivantes:
a. levage de la partie arrière de la moto électrique (100);
b. exclusion de la suspension arrière (150) de la moto électrique (100), permettant ainsi à la fourche arrière (140), qui reste contrainte au châssis de la moto électrique (100), au moyen de la contrainte de rotation (141), de tourner avec une amplitude suffisante pour baisser la roue arrière afin de créer un passage par lequel il est possible d'accéder au compartiment aménagé dans la partie inférieure de la moto électrique (100) par l'arrière, le dit compartiment dans la configuration fermée normale, étant à l'avant de la roue arrière de la moto électrique (100), donc inaccessible de l'arrière;
c. retrait du "bloc de composants électriques" (110) logé dans ledit compartiment aménagé dans la partie inférieure de la moto électrique (100) à travers le passage prévu au moyen des étapes préalables d'ouverture (a. et b.) de la moto électrique (100);
d. substitution du "bloc de composants électriques" (110) par un autre "bloc de composants électriques" en fonctionnement (110) ;
e. levage de la roue arrière pour atteindre sa position nominale adaptée à la conduite de la moto et au rétablissement de la suspension (150) dans une configuration adaptée à son fonctionnement normal;
f. vérification que la panne ou le disfonctionnement n'est plus présent.
